# EUROPEAN PATENT APPLICATION

(11) **EP 4 194 913 A1**
(43) Date of publication of application: **14.06.2023**
(21) Application number: 21213657.6
(22) Date of filing: 10.12.2021
(51) Int. Cl.: G02B 6/42, G02B 6/30

(54) **A PHOTONIC INTEGRATED CHIP ASSEMBLY COMPRISING A PACKAGE SUBSTRATE WITH A LIGHT CONDUCTIVE STRUCTURE**

(71) Applicant: Imec VZW, 3001 Leuven (BE)
(72) Inventor: La Tulipe, Douglas Charles, 3001 Leuven (BE); He, Junwen, 3001 Leuven (BE); Van Campenhout, Joris, 3001 Leuven (BE); Podpod, Arnita, 3001 Leuven (BE); El Amrani, Abderrahim, 3001 Leuven (BE); Kumar, Saurav, 3001 Leuven (BE); Van Steenberge, Geert, 3001 Leuven (BE)
(74) Representative: Roth, Sebastian

(57) **Abstract**

The present disclosure relates to the packaging of an active structure (13) comprising at least one photonic integrated chip PIC (14). In particular, this disclosure provides a photonic integrated chip assembly (10), which includes the active structure and a photonics enabled package substrate (11), which enables light to be provided to the PIC. The photonics enabled package substrate is formed from a package substrate (e.g. of a BGA package) and a light conductive structure (12). A plurality of optical components (19) is arranged in the light conductive structure. The plurality of optical components is adapted to direct first light (17a) from at least one optical coupler (16) to at least one optical element (18), which is configured to couple the first light out of the light conductive structure to the PIC. The plurality of optical components is further adapted to direct second light (17b) from the at least one optical element to the at least one optical coupler.

## Description

### TECHNICAL FIELD

The present disclosure relates to packaging and optically coupling to a photonic integrated chip (PIC) of an active structure. In particular, this disclosure provides a photonic integrated chip assembly, which includes the active structure with the at least one PIC, and which further includes a photonics enabled package substrate that allows guiding light to the at least one PIC.

### BACKGROUND OF THE INVENTION

For the development of photonic technology, the integration of photonic chips in system on chip (SOC) and system in package (SIP) heterogeneous device platforms is important, in order to enable high bandwidth and high frequency optical connectivity to and from these PICs.

It is nowadays common that a PIC, which is used to fabricate a complicated active structure on either a passive interposer substrate or in a molded substrate configuration, may have a surface area smaller than 100 mm², and may have a thickness of below 100 µm due to having a thinned substrate. In comparison, a typical single mode optical fiber has a diameter of 125 µm, and a core diameter of the optical fiber, in which core the light is contained, is only 10 µm. Moreover, it is typical for chip designers to aim for a coupling of between 12-60 optical fibers to waveguides that are integrated into the PIC stack, in order to realize optical connectivity to the PIC that is consistent with the bandwidth capability of the used photonic technology. Accordingly, the optical coupling to the PIC is nowadays constrained by the small form factor of the PIC.

Implementations realizing the optical connectivity to the PIC are currently limited to the coupling of optical fibers in several formats to the PIC. Each format thereby has limitations imposed by the form factor of the PIC and by the optical fibers themselves. Such optical connectivity formats may include:
- Surface coupling of single fibers to the PIC. In particular, the coupling is realized via an optical index-matched glue to attach the fibers to integrated SiNx grating couplers of the PIC stack at a predefined angle that maximizes the coupling efficiency.
- Surface-enabled coupling using prefabricated multi-fiber arrays to couple to the PIC. In particular, the coupling is realized via a glue attach and self-aligned coupling scheme of the multi-fiber array to micro-lens arrays used to channel light from the optical fibers into surface coupled SiNx waveguides or grating couplers of the PIC stack.
- Edge-enabled coupling to the PIC using prefabricated multi-fiber assemblies in trenches at the edge of the PIC. In particular, a self-aligned integration with SiNx waveguides on the PIC stack is enabled.

Each of these formats can impact on the structural integrity of the PIC, and can enable only a limited coupling capability, because of the need for large areas on the edge or surface of the PIC. These large areas need to be suitable to accommodate pre-fabricated, multi-fiber coupling connectors. There are also concerns about the cost of ownership and the complexity of having to integrate robust solutions, which may only facilitate a limited coupling capacity, and has the potential for a decrease in yield.

### SUMMARY OF THE INVENTION

In view of the above, the present disclosure has the objective to provide an improved solution for realizing the optical connectivity to a PIC integrated into an active structure. In particular, an objective is to overcome the problem that the optical coupling to the PIC is constrained by the form factor of the PIC. Another objective is to provide a robust packaging solution for the PIC and the active structure, while realizing the optical connectivity.

These and other objectives are achieved by the solutions of this disclosure as provided in the independent claims. Advantageous implementations are further defined in the dependent claims.

Generally, the solutions of this disclosure are based on the idea of no longer relying on surface or edge coupling of the light in and out of the PIC, so as to eliminate the above-described form factor constraint. Further, to use instead a new design that enables the optical connectivity of the PIC via a modified package substrate. In particular, to enable the coupling and transmission of light in to and out of an active structure comprising the PIC through the modified package substrate. Thereby, the package substrate may be a Ball Grid Array (BGA) package or a similar packaging platform.

A first aspect of this disclosure provides a photonic integrated chip assembly comprising: a package substrate comprising one or more electrical connections and a light conductive structure; an active structure arranged on or above a first surface region of a planar main surface of the package substrate, wherein at least a part of the active structure is electrically connected to the one or more electrical connections, and wherein the active structure comprises at least one PIC; wherein the light conductive structure is partly arranged beneath the first surface region and partly arranged beneath a second surface region of the planar main surface of the package substrate, wherein the second surface region is distinct from the first surface region; at least one optical coupler arranged on or above the second surface region, wherein the at least one optical coupler is configured to couple first light into the light conductive structure and/or to couple second light out of the light conductive structure; at least one optical element arranged at the first surface region, wherein the at least one optical element is configured to couple the first light out of the light conductive structure towards the at least one PIC and/or to couple the second light from the at least one PIC into the light conductive structure; and a plurality of optical components arranged in the light conductive structure, wherein the plurality of optical components is adapted to direct the first light from the at least one optical coupler to the at least one optical element and/or to direct the second light from the at least one optical element to the at least one optical coupler.

The package substrate of the assembly of the first aspect, which includes the light conductive structure, is a photonics enabled package substrate. The package substrate enables light to be provided from the at least one optical coupler to the at least one PIC. That is, the optical connectivity of the at least one PIC is realized using the package substrate. The design of the package substrate overcomes the problem that the optical coupling to a PIC is conventionally constrained by the form factor of the PIC. In the assembly of the first aspect, this is achieved because the second surface region can be (much) larger than a surface region that is covered by the at least one PIC having the small form factor. In particular, the second surface region covered by the at least one optical coupler may be larger in area and/or in each linear dimension than the surface region covered by the at least one PIC (this surface region covered by the at least one PIC being at least part of the first surface region covered by the active structure). Notably, the first surface region and the second surface region maybe arranged at a distance from each other on the main surface of the package substrate.

Due to the above, the assembly of the first aspect is an improved solution for coupling the light to the at least one PIC integrated into the active structure. At the same time, the assembly also provides a packaging solution for the at least one PIC and the active structure.

The package substrate may be part of a package of the assembly. For example, the photonic integrated chip assembly may further comprise a package housing, or enclosure, or molding, or the like, which encloses the active structure that is arranged on or above the package substrate.

Notably, in this disclosure, the expression "arranged on" the package substrate means directly arranged on the package substrate, and the expression "arranged above" the package substrate means spaced from the package substrate, i.e., arranged indirectly on the package substrate with some other element - e.g. an interposer substrate - arranged in between. The understanding of these two expressions is generally valid in this disclosure, and not only regarding the package substrate.

In an implementation of the photonic integrated chip assembly, the package substrate is part of a BGA package.

A BGA package typically comprises a plastic molding in addition to the package substrate, which may be arranged or formed over the active structure, which is arranged on or above the package substrate. The BGA package also has ball grids, which may be part of the one or more electrical connections. The solutions of the present disclosure are thus compatible with BGA packaging, but also with other conventional packaging formats.

In an implementation of the photonic integrated chip assembly, the plurality of optical components is adapted to: direct the first light from beneath the second surface region along at least a first direction to beneath the first surface region and then upwards to the at least one optical element; and/or direct the second light from beneath the first surface region along at least the first direction to beneath the second surface region and the upwards to the at least one optical coupler.

Thus, the light can be guided undisturbed within the light conductive structure. The photonic integrated chip assembly may further comprise one or more optical focusing element that focus the light at the level of the optical coupler.

In an implementation of the photonic integrated chip assembly, the plurality of optical components is adapted to fan-out the second light received from the at least one optical element along a second direction perpendicular to the first direction and/or fan-in the first light received from the at least one optical coupler along the second direction, wherein the first direction and the second direction are in-plane of the package substrate and/or are parallel to the planar main surface of the package substrate.

Herein, the expression "to fan-out" means that the coupling area of the light to the at least one optical coupler is larger than the coupling area of the light to the at least one PIC (and this to the at least one optical component). Therefore, the optical components are adapted "fan-out" the light from the smaller area covered by the at least one PIC to the larger area covered by the at least one optical coupler. Likewise, the expression "to fan-in" means the opposite than "to fan-out". That is the coupling area of the light to the at least one PIC is smaller than the coupling area of the light to the at least one optical coupler. Therefore, the optical components are adapted to "fan-in" the light from the larger area covered by the at least one optical coupler to the smaller area covered by the at least one PIC. The photonic integrated chip assembly may accordingly be referred to as a photonic integrated chip fan-out and/or fan-in assembly.

In an implementation of the photonic integrated chip assembly, the at least one optical element is a plurality of optical elements; and the plurality of optical components is adapted to distribute the first light received from the at least one optical coupler to each optical element of the plurality of optical elements.

The plurality of optical components may also be configured to guide the light from one optical element to another optical element, in case there is a plurality of optical elements.

In an implementation of the photonic integrated chip assembly, the at least one PIC of the active structure is a plurality of PICs; and each of the plurality of optical elements is configured to couple the first light towards one of the plurality of PICs and/or to receive the second light from one of the plurality of PICs.

In this way, using one or more optical couplers, light may be coupled towards multiple PICs or vice versa. In this way, the light conductive structure and the optical components arranged therein can be efficiently used to reduce the form factor of the photonic integrated chip assembly as a whole.

In an implementation of the photonic integrated chip assembly, the plurality of optical components comprises at least one of: one or more lenses; one or more mirrors; one or more waveguides; one or more optical fibers; one or more optical couplers.

In an implementation of the photonic integrated chip assembly, the at least one optical coupler is configured to couple the first light into and the second light out of the light conductive structure perpendicular to the planar main surface of the package substrate; and/or the at least one optical element is configured to couple the first light out of and the second light into the light conductive structure perpendicular to the planar main surface of the package substrate.

This facilitates the optical connection to the at least one optical coupler on the one hand, and allows a larger surface area to be used. On the other hand, this makes the coupling between the light conductive structure and the at least one PIC efficient.

In an implementation of the photonic integrated chip assembly, the at least one optical coupler is configured to receive the first light from at least one optical fiber and/or to couple the second light into the at least one optical fiber.

Thus, the photonic integrated chip assembly is suited for being coupled to an optical fiber or a multi-fiber assembly.

In an implementation of the photonic integrated chip assembly, the active structure further comprises at least one electronic integrated chip (EIC), and wherein the at least one EIC is electrically connected to the one or more electrical connections of the package substrate.

Thus, an electrical signal can be provided from the outside of the photonic integrated chip assembly, e.g. via a ball grid of the package substrate in case of a BGA package, to the at least one EIC and potentially other parts of the active structure.

In an implementation of the photonic integrated chip assembly, the at least one PIC is arranged on the first surface region of the package substrate; or the at least one PIC is arranged above the first surface region on an interposer substrate, the interposer substrate being arranged on the first surface region of the package substrate and being configured to electrically connect the at least part of the active structure to the one or more electrical connections of the package substrate.

The interposer substrate may be a silicon-based substrate and/or a reconstituted carrier substrate.

In an implementation of the photonic integrated chip assembly, the at least one optical element comprises at least one lens that is arranged at the interface of the interposer substrate and the package substrate, wherein the at least one lens is adapted to focus the second light and/or to collimate the first light.

In an implementation of the photonic integrated chip assembly, the photonic chip comprises at least one second lens that is arranged between the interposer substrate and the at least one PIC, wherein the at least one second lens is adapted to focus the first light onto a waveguide coupler in the at least one PIC, the waveguide coupler being connected to an optically active layer of the at least one PIC, and/or to collimate the second light received from the optically active layer of the at least one PIC.

Each of the at least one (first) lens arranged at the interface of interposer substrate and package substrate, and the at least one second lens arranged between the interposer substrate and the PIC(s), can either be a part of the package substrate or a part of the interposer substrate or the at least one PIC, respectively. From an optical alignment point of view, it may be preferable that the at least one first lens is part of the at least one PIC, and/or that the at least one second lens is part of the package substrate. Each PIC may comprise one or more waveguide couplers, and each second lens may be adapted to focus the first light onto one waveguide coupler. That is, multiple second lenses can focus the first light onto multiple waveguide couplers of one PIC, or multiple waveguide couplers of different PICs.

In an implementation of the photonic integrated chip assembly, the at least one PIC comprises an optically active layer, which is arranged on a side of the at least one PIC facing away from the package substrate.

In an implementation of the photonic integrated chip assembly, the light conductive structure forms the first surface region and/or forms the second surface region of the package substrate; or the light conductive structure is embedded into a substrate material of the package substrate and the substrate material forms the first surface region and/or forms the second surface region of the package substrate.

Notably, the light conductive structure can be a waveguide or can be a free-space light-path. Moreover, the light conductive structure can span across the first surface region and the second surface region.

In summary, this disclosure proposes that light (i.e. the first light and/or the second light), which is used in the photonic integrated chip assembly to pass optical signals to and/or from the at least one PIC integrated into the assembly, is routed through the light conductive structure and guided by the optical components. This enables optical communication with the at least one PIC.

In particular, the light conductive structure may receive the light along a vertical direction (i.e., perpendicular to the axis of the main surface of the package substrate), and the light thus goes into the package substrate. There, the light is coupled to the optical components embedded into the light conductive structure of the package substrate, and is distributed to the one or more optical elements, and from there it is coupled to predefined one or more PICs. The optical coupling to the one or more PICs may be a high efficiency, low loss coupling. The light may further be coupled from/to the at least one optical coupler to/from at least one optical fiber. The at least one optical fiber may be embedded or attached to the photonic integrated chip assembly, and may couple the light to the outside world. This disclosure solves the problem of the optical connectivity of PIC(s) being constrained by their structure and form factor.

The optical connectivity of the at least one PIC, according to the solutions of this disclosure, may enable optical communications within the assembly or to the outside of the assembly. Further, it may enable building a light source, which may controlled through the electrical connectivity, wherein the light source is configured to produce high frequency communication signals, for example, in systems constrained by electrical resistivity and capacitance concerns.

### BRIEF DESCRIPTION OF THE DRAWINGS

The above described aspects and implementations are explained in the following description of embodiments with respect to the enclosed drawings:
- FIG. 1: shows a photonic integrated chip assembly according to an embodiment of this disclosure in a sectional view.
- FIG. 2: shows a photonic integrated chip assembly according to an embodiment of this disclosure in a top view.
- FIG. 3: shows a photonic integrated chip assembly according to an embodiment of this disclosure in a sectional view.
- FIG. 4: shows a photonic integrated chip assembly according to an embodiment of this disclosure in ta top view.

### DETAILED DESCRIPTION OF EMBODIMENTS OF THE INVENTION

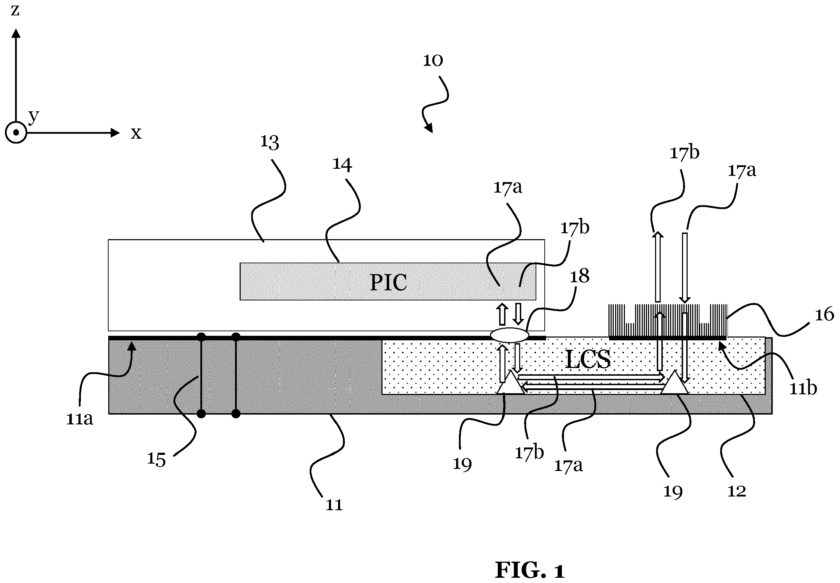

FIG. 1 shows a photonic integrated chip assembly 10 (in the following only "assembly 10") according to an embodiment of this disclosure in a sectional view (showing the assembly 10 along an x-axis and a z-axis of a Cartesian coordinate system, the γ-axis thereof extending into the plane). The assembly 10 comprises a photonics enabled packaging substrate, which is designed to carry an active structure. The active structure may be an optically and electrically active structure, and may comprise multiple integrated electrical and optical components.

In particular, the assembly 10 comprises a package substrate 11, and the package substrate 11 comprises one or more electrical connections 15 and a light conductive structure 12 ("LCS" in FIG. 1). The light conductive structure 12 may be embedded into a substrate material of the package substrate 11. In this case, the substrate material (e.g., a semiconductor material or a dielectric material) may completely surround the light conductive structure 12. The substrate material may in this case further form entirely a planar main surface of the package substrate 11 (not illustrated in FIG. 1). Alternatively, the light conductive structure 12 may be arranged such in the package substrate 11 that it forms at least a part of the planar main surface of the package substrate 11 (as illustrated in FIG. 1).

The assembly 10 further comprises an active structure 13, which is arranged on or above a first surface region 11a (indicated by a bold line in FIG. 1) of the planar main surface. At least a part of the active structure 13 is electrically connected to the one or more electrical connections 15. For example, the active structure may comprise one or more integrated circuits (ICs), like one or more EICs or one or more application-specific integrated circuits (ASICs), which may each be electrically connected to the one or more electrical connections 15. The electrical connections 15 may also connect one side of the package substrate 11 with the other side of the package substrate 11, i.e., the one or more electrical connections 15 may extend through the package substrate 11. In this way, the one or more electrical connections 15 allow sending electrical signals, e.g. control signals, to relevant parts of the active structure 13 from the outside of the assembly 10.

The active structure 13 also comprises at least one PIC 14. The active structure 13 may comprise one PIC 14 or more than one PIC 14. A PIC 14 in this disclosure is a chip, which contains one or more photonic components, which are components that work with light (photons). For example, each PIC 14 may comprise at least one optically active layer or region. This at least one optically active layer or region may be arranged on a side of the PIC 14 facing away from the package substrate 11. An example for a PIC 14 is a laser or an optical sensor, another example is an optical transmitter and/or an optical receiver. Each PIC 14 may comprise one or more waveguide couplers, which maybe connected to an optically active layer of the PIC 14.

The light conductive structure 12 is partly arranged beneath the first surface region 11a, and is partly arranged beneath a second surface region 11b (indicated by a bold line in FIG. 1) of the planar main surface of the package substrate 11. The second surface region 11b is thereby distinct from the first surface region 11a, and may specifically be distanced from the first surface region 11a. The light conductive structure 12 can also span across the entire first surface region 11a and/or the entire second surface region 11b, or the light conductive structure 12 can be arranged only beneath respective parts of these surface regions 11a, 11b.

The assembly 10 further comprises at least one optical coupler 16, which is arranged on or above the second surface region 11b. The assembly 10 may comprise one optical coupler 16 or may comprise more than one optical coupler 16. Each of the one or more optical couplers 16 is configured to couple first light 17a into the light conductive structure 12 and/or to couple second light 17b out of the light conductive structure 12. The first light 17a and the second light 17b may be of the same wavelength, and may differ only in propagation direction within the light conductive structure 12. The first light 17a and the second light 17b may also differ in their wavelengths. The first light 17a and the second light 17b may, respectively, also comprise multiple wavelengths.

Further, the assembly 10 comprises at least one optical element 18, which is arranged at the first surface region 11a, for example, on or beneath the first surface region 11a. That is, the assembly 10 comprises one optical element 18 or more than one optical element 18. Each optical element 18 of the at least one optical element 18 is configured to couple the first light 17a out of the light conductive structure 12 and towards a PIC of the at least one PIC 14. The first light 17a maybe coupled into the PIC 14, for example, using one or more waveguide couplers in the PIC 14 as explained further below. Additionally or alternatively, each optical element 18 is configured to couple the second light 17b received from a PIC of the at least one PIC 14 into the light conductive structure 12. The at least one optical element 18 may be part of the light conductive structure 12. Each optical element 18 may be associated with one PIC 14 of the at least one PIC 14, i.e., exchanges first and/or second light 17a, 17b only with this associated PIC 14. However, multiple optical elements can be associated with one PIC 14.

Further, the assembly 10 comprises a plurality of optical components 19, which is arranged in the light conductive structure 12. The plurality of optical components 19 is adapted to direct the first light 17a from the at least one optical coupler 16 to the at least one optical element 18, and/or is configured to direct the second light 17b from the at least one optical element 18 to the at least one optical coupler 19. Thereby, a first set of the optical components 19 maybe used to direct the first light 17a, and a second set of the optical components 19 maybe used to direct the second light 17b. In case of more than one optical element 18 and/or more than one optical coupler 19, different sets of optical components 19 may be used to direct light to the different optical elements 18 and/or different optical couplers 16.

The plurality of optical components 19 comprises at least one of: one or more lenses; one or more mirrors; one or more waveguides; one or more optical fibers; one or more optical couplers. For example, the optical components could be prefabricated into the light conductive structure. The optical components 19 could include prefabricated silicon components, quartz components, etc. which may facilitate the turning and directing of the light from one location on the main surface of the package substrate to another location. These types of optical components 19 may be arranged as desired to guide the first light 17a and/or the second light 17b along one or more optical paths through the light conductive structure. The optical components 19 maybe part of the light conductive structure 12.

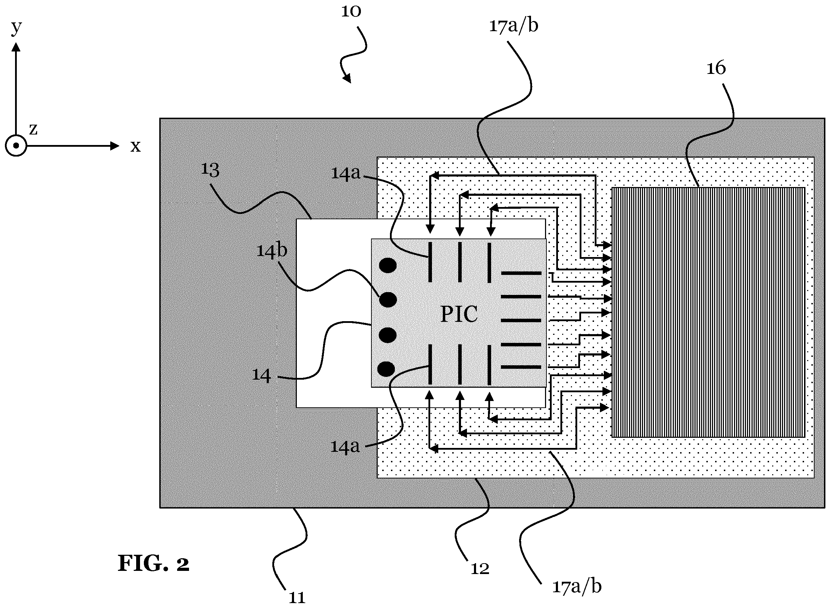

FIG. 2 shows a photonic integrated chip assembly 10 according to an embodiment of this disclosure in a top view (showing the assembly 10 along the x-axis and y-axis), wherein the embodiment shown in FIG. 2 builds on that shown in FIG. 1. Same elements in FIG. 1 and 2 are labelled with the same reference signs, and are implemented likewise.

FIG. 2 shows that the surface area (of the planar main surface of the package substrate 11), which is covered by the at least one PIC 14, may be smaller than the surface area that is covered by the at least one optical coupler 16, at least in one of the x- and y-direction (here both). The at least one PIC 14 may include one or more waveguide couplers 14a and one or more solder connections 14b, which may be connected to the electrical connections 15.

FIG. 2 also shows that, by means of the plurality of optical components 19 (not illustrated in FIG. 2 due to the top view), the second light 17b may be directed in the light conductive structure 12 from beneath the first surface region 11a (covered by the active structure 13) along a first direction (here the first direction is parallel to the x-axis) to beneath the second surface region 11b (covered by the at least one optical coupler 16) and then to the at least one optical coupler 16. Thereby, the second light 17b may be fanned-out in the light conductive structure 12 along a second direction (here the second direction is parallel to the y-axis), wherein the second direction is perpendicular to the first direction. Likewise, by means of the plurality of optical components 19, the first light 17a may be directed in the light conductive structure 12 from beneath the second surface region 11b along the first direction (x-axis) to beneath the first surface region 11a and then to the at least one optical element 18 (not shown in FIG. 2). Thereby, the first light 17a maybe fanned-in into the light conductive structure 12 along the second direction (y-axis). Notably, as can be seen in FIG. 1, the first direction and the second direction are in-plane of the package substrate 11. In particular, the first direction and the second direction are parallel to the planar main surface of the package substrate 11. From the at least one optical element 18, the first light 17 may be further directed to and coupled into the one or more waveguide couplers 14a of the at least one PIC 14.

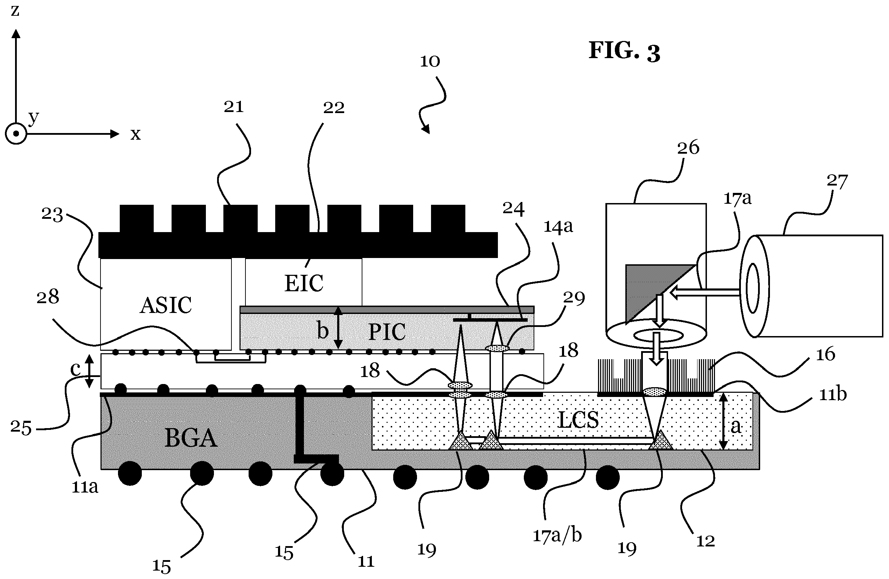

FIG. 3 shows a photonic integrated chip assembly 10 according to an embodiment of this disclosure in a sectional view (the assembly 10 is shown along the x-axis and z-axis), wherein the embodiment shown in FIG. 2 builds on that shown in FIG. 1. Same elements in FIG. 1 and 3 are labelled with the same reference signs, and are implemented likewise.

FIG. 3 shows the active structure 13 in more detail. As in FIG. 1, the active structure 13 comprises the at least one PIC 14. Further, the active structure 13 may comprise at least one EIC 22 and/or at least one ASIC 23. The EIC 22 and/or the ASIC 23 maybe electrically connected to the one or more electrical connections 15. The one or more electrical connections 15 may include solder balls or a ball grid of the package substrate 11. Further, the EIC 22 and/or the ASIC 23 may be connected electrically to the at least one PIC 14.

The active structure 13 maybe arranged on the package substrate 11 (not illustrated in FIG. 3), or may be arranged above the package substrate 11 with an interposer substrate 25 - which is arranged on the package substrate 11 - arranged in between the package substrate 11 and the active structure 13. The interposer substrate 25 maybe a silicon substrate and/or maybe a reconstituted substrate. The interposer substrate 25 may be arranged on the first surface region 11a of the package substrate 11. The interposer substrate 25 may be configured to electrically connect the at least part of the active structure 13 to the one or more electrical connections 15 of the package substrate 11. The interposer substrate 25 may also comprise further electrical connections 28, e.g., slider connections 28, which are configured to connect the solder balls 14b of the at least one PIC 14 to, for example, the ASIC 23. The interposer substrate 25 may have a thickness c (along the z-axis) in a range of between 50-100 µm (lower bound) and 500 µm (upper bound). Each PIC 14 may have a thickness b (along the z-axis) in a range of between 50-100 µm (lower bound) and 775 µm (upper bound).

FIG. 3 also shows that the assembly 10 may comprise at least one first lens as the at least one optical element 18. That is, the assembly 10 may comprise one first lens 18 or more than one first lens 18. The at least one first lens 18 may be arranged at the interface of the interposer substrate 25 and the package substrate 11. Thereby, each first lens 18 may be embedded into or formed in the interposer substrate 25 and/or into the package substrate 11. It may also be a part of the package substrate 11 and/or of the interposer substrate 25. At least one first lens 18 of the at least one first lens 18 can be configured to focus the second light 17b, for instance, towards an optical component 19 of the plurality of optical components 19. Further, at least one first lens 18 can be configured to collimate the first light 17a on its further way to a PIC 14 of the at least one PIC 18. At least one first lens 18 may, however, also be adapted to focus the first light 17a onto one or more waveguide couplers 14a of a PIC 14 of the at least one PIC 14, wherein the one or more waveguide couplers 14a are connected to an optically active layer 24 of the PIC 14 of the at least one PIC 14. Thus, the first light 17a may be coupled into the PIC 14 using the waveguide coupler(s) 14a, and may be further guided to the optically active layer 24 by the waveguide coupler(s) 14a. Also the outcoupling of the second light 17 from a PIC 14 of the at least one PIC 14 may happen via the one or more waveguide coupler(s) 14a.

The assembly 10 may also comprise at least one second lens 29, which may be arranged between the interposer substrate 25 and the at least one PIC 14 (or between the package substrate 11 and the at least one PIC 14, if the PIC 14 is arranged on the package substrate 11. That is, the assembly 10 may comprise one second lens 20 or more than one second lens 29. Thereby, each second lens 29 may be embedded into the interposer substrate 25 and/or into a PIC 14 of the at least one PIC 14. Each second lens 29 may also be a part of the interposer substrate 25 and/or of a PIC 14 of the at least one PIC 14. At least one second lens 29 can be configured to focus the first light 17a onto an optically active layer 24 of a PIC 14 of the at least one PIC 14. Further, at least one second lens 29 may be configured to collimate the second light 17b received from the optically active layer 24 of a PIC 14 of the at least one PIC 14, for instance, on its way to the light conductive structure 12. There, a first lens 18 may be arranged to focus the light, which was previously collimated by and received from the second lens 29, for instance, onto an optical component 19 in the light conductive structure 12. The light conductive structure 12 may have a thickness a (along the z-axis) in a range of between 50-100 µm (lower bound) and 1000 µm (upper bound).

FIG. 3 also shows that the at least one optical coupler 16 may be configured to receive the first light 17a from at least one optical fiber 26, 27. For instance, from a single fiber or from a fiber assembly. Further, the at least one optical coupler 16 may be configured to couple the second light 17b into the at least one optical fiber 26, 27. Each optical coupler 16 maybe associated with one optical fiber 26, 27. The at least one optical fiber 26, 27 may also include one or more elements to couple the light from one fiber to the other.

Finally, FIG. 3 shows that the package substrate 11 may be of a BGA package. The electrical connections 15 may accordingly include ball grids. The assembly 10 may further comprise heat sink 21, which may be connected to the active structure 13, and may at the same time protect the active structure 13. The heat sink 21 may be part of the BGA package.

According to the previously discussed figures, this disclosure proposes the integration of an embedded photonics capability (by means of the light conductive structure 12) as a part of a typical packaging substrate 11. This may accompany solder bond capability of the package substrate 11 for electrical connectivity. The photonics capability can decouple constraints, which are conventionally imposed by the at least one PIC's 14 form factor, in order to enable high density, low optical loss, optical fiber coupling. Also, the integration of a light source is possible on package level as a means of handling thermal concerns.

In one possible implementation, as shown in FIG. 3, the second light 17b may be deflected from a top surface (active layer 24) of the PIC 14 to the backside of the PIC 14 (facing the package substrate 11). The beam of the second light 17b may thereby be expanded and collimated at the backside of the PIC 14 by at least one second lens 29. The expanded beam on the backside may increase the alignment tolerance to accommodate any shift of the PIC 14 upon packaging. An optical element 18 on the package substrate 11 then has a lensing function and may interface the collimated beam coming from the backside of the PIC 14 from the second lens 29. The beam of the second light 17b may then be coupled to a low-loss waveguide in the light conductive structure 12 in the package substrate 11. The second light 17b is then carried in the light conductive structure 12 (may also be referred to as "photonic element"), and may then be expanded (e.g., fanned-out) and collimated for coupling to an optical coupler 16, which may be a fiber connector, arranged on the second surface region 11b of the package substrate 11 surface. The second surface region 11b is outside the PIC's 14 area (and outside the first surface region 11a covered by the active structure 13 including the PIC 14), for instance, at an edge-near surface of the package substrate 11. In this way, a full size heatsink 21 can also be attached to the active structure's 13 top surface without interfering the fiber connector attachment and the optical coupler 16.

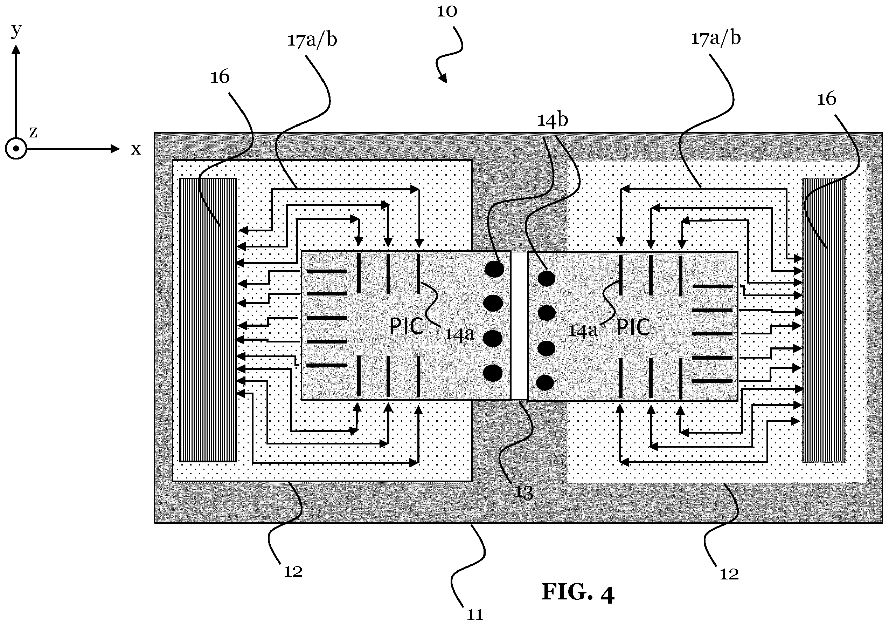

FIG. 4 shows a photonic integrated chip assembly 10 according to an embodiment of this disclosure in a top view (the assembly 10 is shown along the x-axis and the y-axis), wherein the embodiment shown in FIG. 4 builds on that shown in FIG. 2. Same elements in FIG. 2 and 4 are labelled with the same reference signs, and are implemented likewise.

In particular, FIG. 4 shows that the active structure 13 may comprise a plurality of PICs 14 (here, as an example, two PICs). Each PIC may be connected by solder balls 14b to the electrical connections 15 of the package substrate 11. In this case, the first light 17a may be fanned-in and distributed to each of the PICs 14, and/or the second light 17b coming from the PICs 14 may be fanned-out to one or more optical couplers 16 (here, as an example, two optical couplers 16 are shown, which each cover a larger surface area than the PICs at least on the y direction). To this end, for instance, each of the plurality of optical elements 18 (not shown in FIG. 4) may be configured to couple the first light 17a towards one of the plurality of PICs 14 and/or to receive the second light 17b from one of the plurality of PICs 14. Thereby, one or more waveguide couplers 14a of each PIC 14 may be used for coupling the first light 17 into the respective PIC 14 and/or coupling the second light 17b out of the respective PIC 14. Moreover, the plurality of optical components 19 may in this case be adapted to distribute the first light 17a received from the at least one optical coupler 16 to each optical element 18 of the plurality of optical elements 18. Each optical element 18 may be associated with a respective PIC 14 of the multiple PICs 14.

In summary, the embodiments of this disclosure enable optical light coupling between an optical coupler 16 (potentially, further to an optical fiber 26, 27) and a PIC 14 of an active structure 13 of the assembly 10. The assembly 10 comprises the (bottom) package substrate 11 (e.g., for a BGA package) as a base substrate of the assembly 10. One or more PICs 14 maybe positioned above an upper surface of the package substrate 11, and each PIC 14 may haves its waveguide coupler(s) 14a, and may have its optically active layer(s) on the topside facing away from the package substrate 11. The waveguide coupler(s) 14a may be embedded into the PIC 14 or may be arranged on a surface of the PIC 14. The waveguide coupler(s) 14a may be connected to the optically active layer(s) 24 of the PIC 14. It is possible, that the waveguide coupler(s) 14a are formed closely beneath the optically active layer(s) 24 or even in an optically active layer 24. The light conductive structure 12 is integrated into the package substrate 11 and has a topside, which may form the second surface region 11b. The at least one optical (fiber) coupler 16 is positioned above the package substrate 11 and is optically coupled to the light conductive structure 12 through the topside thereof. Optical light 17b/17a to/from e.g. the fiber 26, 27, can be coupled through the optical coupler 16 to the light conductive structure 12, particularly, at an area distant from the PIC 14 (or the optional interposer substrate 25) The interposer substrate 25 may be provided with lenses 18, 29 for focusing and beam expansion (for improved alignment tolerance). The optical light from/to the PIC's 14 active side is coupled down/upwards from the active side, for instance by means of the one or more waveguide couplers 14a of the PIC 14, through the PIC 14, and to the optical element 18 arranged below the PIC 14 and above the light conductive structure 12.

## Claims

1. A photonic integrated chip assembly (10) comprising:
a package substrate (11) comprising one or more electrical connections (15) and a light conductive structure (12);
an active structure (13) arranged on or above a first surface region (11a) of a planar main surface of the package substrate (11), wherein at least a part of the active structure (13) is electrically connected to the one or more electrical connections (15), and wherein the active structure (13) comprises at least one photonic integrated circuit, PIC (14);
wherein the light conductive structure (12) is partly arranged beneath the first surface region (11a) and partly arranged beneath a second surface region (11b) of the planar main surface of the package substrate (11), wherein the second surface region (11b) is distinct from the first surface region (11a);
at least one optical coupler (16) arranged on or above the second surface region (11b), wherein the at least one optical coupler (16) is configured to couple first light (17a) into the light conductive structure (12) and/or to couple second light (17b) out of the light conductive structure (12);
at least one optical element (18) arranged at the first surface region (11a), wherein the at least one optical element (18) is configured to couple the first light (17a) out of the light conductive structure (12) towards the at least one PIC (14) and/or to couple the second light (17b) from the at least one PIC (14) into the light conductive structure (12); and
a plurality of optical components (19) arranged in the light conductive structure (12), wherein the plurality of optical components (19) is adapted to direct the first light (17a) from the at least one optical coupler (16) to the at least one optical element (18) and/or to direct the second light (17b) from the at least one optical element (18) to the at least one optical coupler (16).

2. The photonic integrated chip assembly (10) according to claim 1, wherein the package substrate (11) is part of a ball grid array, BGA, package.

3. The photonic integrated chip assembly (10) according to claim 1 or 2, wherein the plurality of optical components (19) is adapted to:
direct the first light (17a) from beneath the second surface region (11b) along at least a first direction (x) to beneath the first surface region (11a) and then upwards to the at least one optical element (18); and/or
direct the second light (17b) from beneath the first surface region (11a) along at least the first direction (x) to beneath the second surface region (11b) and the upwards to the at least one optical coupler (16).

4. The photonic integrated chip assembly (10) according to claim 3, wherein the plurality of optical components (19) is adapted to:
fan-out the second light (17b) received from the at least one optical element (18) along a second direction (y) perpendicular to the first direction (x) and/or fan-in the first light (17a) received from the at least one optical coupler (16) along the second direction (y),
wherein the first direction (x) and the second direction (y) are in-plane of the package substrate (11) and/or are parallel to the planar main surface of the package substrate (11).

5. The photonic integrated chip assembly (10) according to claim 3 and 4, wherein:
the at least one optical element (18) is a plurality of optical elements (18); and
the plurality of optical components (19) is adapted to distribute the first light (17a) received from the at least one optical coupler (16) to each optical element (18) of the plurality of optical elements (18).

6. The photonic integrated chip assembly (10) according to claim 5, wherein:
the at least one PIC (14) of the active structure (13) is a plurality of PICs (14); and
each of the plurality of optical elements (18) is configured to couple the first light (17a) towards one of the plurality of PICs (14) and/or to receive the second light (17b) from one of the plurality of PICs (14).

7. The photonic integrated chip assembly (10) according to one of the claims 1 to 6, wherein the plurality of optical components (19) comprises at least one of:
one or more lenses;
one or more mirrors;
one or more waveguides;
one or more optical fibers;
one or more optical couplers.

8. The photonic integrated chip assembly (10) according to one of the claims 1 to 7, wherein:
the at least one optical coupler (16) is configured to couple the first light (17a) into and the second light (17b) out of the light conductive structure (12) perpendicular to the planar main surface of the package substrate (11); and/or
the at least one optical element (18) is configured to couple the first light (17a) out of and the second light (17b) into the light conductive structure (12) perpendicular to the planar main surface of the package substrate (11).

9. The photonic integrated chip assembly (10) according to one of the claims 1 to 8, wherein the at least one optical coupler (16) is configured to receive the first light (17a) from at least one optical fiber (26, 27) and/or to couple the second light (17b) into the at least one optical fiber (26, 27).

10. The photonic integrated chip assembly (10) according to one of the claims 1 to 9, wherein the active structure (13) further comprises at least one electronic integrated chip, EIC, (22) and wherein the at least one EIC (22) is electrically connected to the one or more electrical connections (15) of the package substrate (11).

11. The photonic integrated chip assembly (10) according to one of the claims 1 to 10, wherein:
the at least one PIC (14) is arranged on the first surface region (11a) of the package substrate (11); or
the at least one PIC (14) is arranged above the first surface region (11a) on an interposer substrate (25), the interposer substrate (25) being arranged on the first surface region (11a) of the package substrate (11) and being configured to electrically connect the at least part of the active structure (13) to the one or more electrical connections (15) of the package substrate (11).

12. The photonic integrated chip assembly (10) according to claim 11, wherein the at least one optical element (18) comprises at least one lens that is arranged at the interface of the interposer substrate (25) and the package substrate (11), wherein the at least one lens is adapted to focus the second light (17b) and/or to collimate the first light (17a).

13. The photonic integrated chip assembly (10) according to claim 12, wherein the photonic integrated chip assembly (10) comprises at least one second lens (29) that is arranged between the interposer substrate (25) and the at least one PIC (14), wherein the at least one second lens (29) is adapted to focus the first light (17a) onto a waveguide coupler in the at least one PIC, the waveguide coupler being connected to an optically active layer (24) of the at least one PIC (14), and/or to collimate the second light (17b) received from the optically active layer (24) of the at least one PIC (14).

14. The photonic integrated chip assembly (10) according to one of the claims 1 to 13, wherein the at least one PIC (14) comprises an optically active layer (24), which is arranged on a side of the at least one PIC (14) facing away from the package substrate (11).

15. The photonic integrated chip assembly (10) according to one of the claims 1 to 14, wherein:
the light conductive structure (12) forms the first surface region (11a) and/or forms the second surface region (11b) of the package substrate (11); or
the light conductive structure (12) is embedded into a substrate material of the package substrate (11) and the substrate material forms the first surface region (11a) and/or forms the second surface region (11b) of the package substrate (11).
